# EUROPEAN PATENT APPLICATION

(11) **EP 3 910 327 A1**
(43) Date of publication of application: **17.11.2021**
(21) Application number: 20173970.3
(22) Date of filing: 11.05.2020
(51) Int. Cl.: G01N 27/87

(54) **SENSOR FOR DETECTION AND/OR MONITORING THE GROWTH OF DEFECTS**

(71) Applicant: Villari Holding B.V., 2629 JD Delft (NL); Technische Universiteit Delft, 2628 CN Delft (NL); Dot Dot Factory B.V., 5624 NR Eindhoven (NL)
(72) Inventor: Puik, Erik, 5624 NR Eindhoven (NL); Kaminski, Miroslaw Lech, 29780 Nerja (ES); Van der Horst, Menno Patrick, Houston, TX 77024 (US)
(74) Representative: De Vries & Metman

(57) **Abstract**

The invention relates to a sensor (5) for detection and/or monitoring the growth of defects, in particular cracks (2), in ferromagnetic structures (1), such as civil engineering and marine structures, comprising a plurality of magnetometers (4) for measuring magnetic flux leakage (MFL), which magnetometers (4) are arranged in a plane, and a support (7) carrying the magnetometers (4). The sensor (5) comprises a layer (6) of a magnetically permeable material extending over and/or between the magnetometers (4).

## Description

The invention relates to a sensor for detection and/or growth monitoring of defects, in particular cracks, in ferromagnetic structures, such as civil engineering and marine structures, comprising a plurality of magnetometers for measuring magnetic flux leakage (MFL), which magnetometers are arranged in a plane, and a support carrying the magnetometers.

Non-destructive evaluation (NDE) is widely used to inspect objects, such as ships, offshore structures, renewable energy devices, e.g. windmills, bridges, buildings, cranes, railway, cars, machinery, and pipelines, for defects and damage due to corrosion and wear. Defects include cracks, inclusions, lack of fusion, incomplete penetration and porosities. One of the NDE methods is based on the so-called magnetic flux leakage (MFL) in the vicinity of a defect.

The best-known method that is based on MFL is magnetic particle inspection (MPI) for the detection of defects. This method, however, needs the presence and subjective judgment of a surveyor. Therefore, it is preferred to carry out MFL measurements using magnetometers, such as those based on the Hall effect.

As explained in Van der Horst, M. (2018), "On self magnetic flux leakage [SMFL] in support of fatigue crack monitoring in ship and offshore structures: A numerical, experimental, and full-scale application study.", regular inspection is needed in order to confirm adequate structural integrity throughout the entire service life of the structure. Detected fatigue cracks that are too long for safe operation need to be repaired. Detected cracks of acceptable length need to be at least inspected more frequently. These inspections are costly, time consuming, and hazardous, so additional inspections on top of the periodical regulatory surveys are to be avoided if possible.

In Van der Horst, M. (2018), "On self magnetic flux leakage ...", it is mentioned that "The envisaged crack monitoring system would consist of arrays of Hall effect sensors that are placed on detected cracks, so that their propagation can be monitored without additional inspections. The Hall effect sensors need to be placed at an optimal altitude above the metal surface, balancing between the sensor sensitivity and accompanied costs, and the spatial density of sensors required for accurate crack length characterization. In principle, a crack can be monitored as long as it is underneath the sensor array. However, crack length dependency of the SMFL creates opportunities to estimate the crack length even when it has propagated outside the sensor array."

"Measured SMFL signals are relatively weak when compared to Magnetic Flux Leakage signals with active magnetization typically close to magnetic saturation. For this reason, additional effects may need to be taken into account and corrected for by the envisaged crack monitoring system."

It is an object of the present invention to provide a robust and preferably passive sensor for detection and/or growth monitoring of defects.

To this end, the sensor according to the invention is characterized by a layer of a magnetically permeable material extending over and/or between the magnetometers.

In an embodiment, the support carrying the magnetometers extends at least partially between the plurality of magnetometers and/or between the plurality of magnetometers and the layer of a magnetically permeable material. Thus, the distance or space between the magnetometers and the structure to be monitored can be kept small or preferably zero, in which case the magnetometers can be positioned directly on the structure to be monitored.

The layer of a magnetically permeable material attracts the magnetic flux leakage (MFL). As a result, relatively strong, local disturbances in the magnetic field caused by one or more defects are spread out over a wider area. Although this spreading weakens the disturbances, the disturbances were found to be still strong enough to be measured by means of the magnetometers and to provide a two-dimensional representation of a defect and subsequent changes, such as appearance and/or growth, of the defect. Further, the sensor according to the present invention enables or at least facilitates passive detection and/or monitoring, e.g. when only permanent magnetisation, stress induced magnetisation and/or the Earth magnetic field is/are available as a source or origin of magnetism.

In an embodiment, the relative magnetic permeability of the (layer of) magnetically permeable material is at least 10, preferably at least 100, preferably at least 1.000, preferably at least 10.000. Relative permeability, denoted by the symbol µᵣ, is the ratio of the permeability µ of a specific medium to the permeability of vacuum µ₀ (µᵣ = µ/µ₀).

In an embodiment, the layer is made from a ferrometal, such as iron, cobalt, nickel and gadolinium, or (ferro)alloy, such as steel, Nanoperm®, Mu-metal.

In another embodiment, the layer has a thickness of at least 0.01 millimeter (mm), preferably at least 0.1 millimeter, preferably a thickness in a range from 0.1 to 5 mm, preferably in a range from 0.5 to 2 mm.

The relative magnetic permeability and/or the thickness of the layer are preferably selected to achieve an efficacious or ideally optimal balance between, on the one hand, the number and spatial distribution of the sensors and, on the other hand, the required signal strength.

In an embodiment, the relative permeability and/or the thickness of the layer are substantially constant over the surface of the layer.

In an embodiment, the layer of a magnetically permeable material extends over all the magnetometers.

In other embodiments, the sensor comprises at least 2 magnetometers, preferably at least 4 magnetometers, preferably at least 10 magnetometers, preferably at least 20 magnetometers and/or the magnetometers are arranged in an array and/or the distance between most, preferably all, of the magnetometers is equal.

In an embodiment, the one or more, e.g. all, of the magnetometers measure the magnetic field for three physical axes, typically in x-, y-, and z-direction.

It is preferred that the magnetometers are configured to measure magnetism based on the Hall effect or based on anisotropic magnetoresistance (AMR).

In an embodiment, the sensor comprises an adhesive layer, e.g. in the form of adhesive tape or a coating, mechanical fasteners and/or one or more magnets to mount the sensor on a metal structure.

If the sensor comprises an adhesive layer, the layer will typically directly face the metal structure, with the layer of a magnetically permeable material on the other side of the magnetometers. If the sensor comprises one or more mechanical fasteners and or magnets, those can be either on the side facing the structure or on a different location, e.g. on the side of the layer of magnetically permeable material remote from the structure.

In an embodiment, the layer is flexible. Thus, the sensor, including the magnetometers arranged in a plane, is adaptable in shape to the shape of the structure on which it is mounted, e.g. to follow a corner or curve or bridge an irregularity, such as a weld.

In another embodiment, the sensor comprises a controller connected to the magnetometers and configured to initiate the measurements carried out with magnetometers and/or to collect measured data from the magnetometers.

In an embodiment, to reduce energy consumption, the controller is configured to repeatedly, preferably periodically, turn the sensor on, initiate the measurements, and turn the sensor off.

In an embodiment, the controller comprises a processor, a memory, e.g. an (E)EPROM on a printed circuit board, that is accessible via the controller.

In another embodiment, the sensor comprises a battery and/or an energy generating and/or harvesting device, such as a solar cell.

In another embodiment, the sensor comprises a transmitter to send data measured by the magnetometers to a receiver. On open structures, such as bridges and offshore platforms, the transmitter is preferably based on digital cellular communication, e.g. GSM, or radio frequency, such as LoRa, whereas in confined structures, e.g. inside a tanker, local communication, e.g. WiFi, is preferred.

In an embodiment, the magnetometers, the layer, and the support, and, if present, the controller and/or the transmitter, are accommodated in a housing and/or are embedded, e.g. in a thermoplastic or thermohardening material, e.g. to protect these components from adverse effects of the surrounding environment, such as corrosion and weather, and provide an intrinsically safe barrier.

It is preferred that the sensor is water and/or oil resistant or weather-, water- and/or oilproof, e.g. such that it can be installed in harsh environments, underwater and/or in oil tanks.

Within the framework of the present invention the word "plane" refers to an at least substantially two-dimensional arrangement of the magnetometers. It includes flat planes and planes containing e.g. one or more bends, curves, dents, cavities and/or protrusions. The word "growth" includes effects on a microscale, such as increases of defects (well) below 1 millimeter, and effects on a macroscale. The latter effects are also referred to as propagation, i.e. defect propagation is a form of defect growth.

The invention will now be explained in more detail with reference to the Figures, which show preferred embodiments of the present invention.
Figure 1 is a cross-section through a metal plate and a crack in that plate.
Figure 2 schematically shows the plate of Figure 1, wherein a sensor for monitoring crack growth has been placed over the crack.
Figure 3 schematically shows the plate of Figure 1, wherein a sensor for monitoring crack growth in accordance with the present invention has been placed over the crack.
Figure 4 is a top view of a further sensor for monitoring crack growth in a ferromagnetic structure in accordance with the present invention.
Figures 5 to 7 illustrate the propagation of a crack in a ferromagnetic structure by means of the sensor of Figure 4.

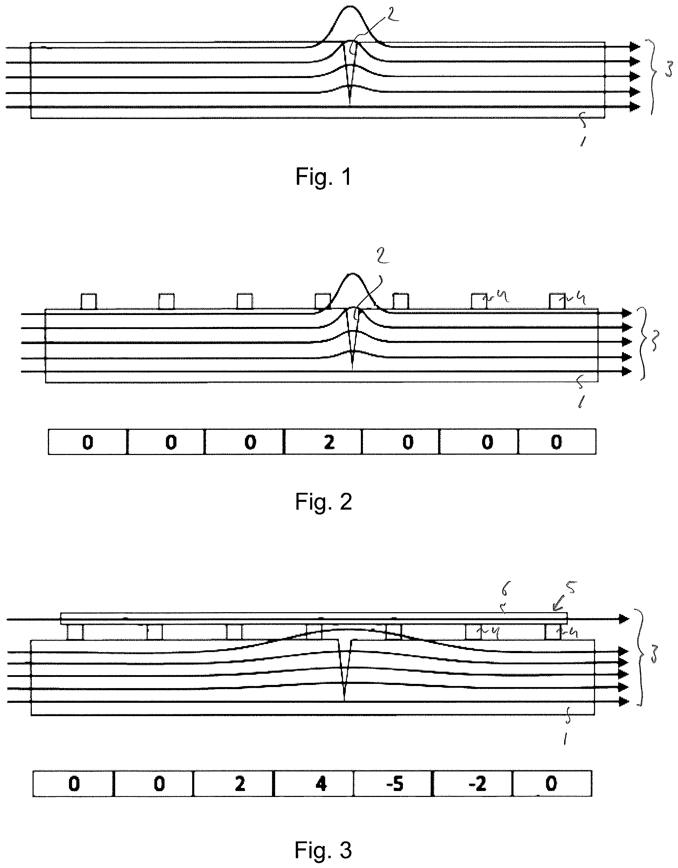

Figure 1 shows a cross-section through a ferromagnetic plate, e.g. a steel plate 1, and a crack 2 in that plate. The plate is magnetized by the Earth magnetic field and/or stress induced magnetism. The magnetic field is depicted by means of magnetic field lines 3. These lines show magnetic flux leakage (MFL) in the vicinity of a crack 2.

Figure 2 shows the plate 1 provided with a sensor for carrying out MFL measurements, having a plurality of Hall effect magnetometers 4 arranged in an array. E.g. the sensor comprises 60 magnetometers arranged in a triangular pattern and at equal mutual distances. The numerical values below the plate are the values measured by corresponding magnetometers.

Figure 3 shows a sensor 5 for carrying out MFL measurements, in accordance with the present invention. The sensor has a plurality of Hall effect magnetometers 4, a support (not shown) carrying the magnetometers, and a layer 6 of a magnetically permeable material extending over the magnetometers. In a specific example, the layer is continuous (no opening or other cutaway portions), made from Mu-metal, has a thickness of 1 mm, and extends over all the magnetometers. The sensor is positioned over the defect with the magnetometers resting directly on the plate.

Figures 2 and 3 each show values measured in one row of magnetometers. A comparison of the values confirms that the layer of a magnetically permeable material (Figure 3) attracts the magnetic flux leakage (MFL) and that, as a result, a relatively strong, the local disturbance in the magnetic field caused by the defect is spread out over a wider area and is measured more effectively. Further, in this specific example, despite the fact that in Figure 2 the magnetic peak is stronger than that in Figure 3, the value that is measured by the magnetometer nearest the defect is actually relatively low, lower than the value measured in Figure 3.

Figure 3 further illustrates that the values measured on one side of the crack are positive, whereas the values on the other side of the crack are negative.

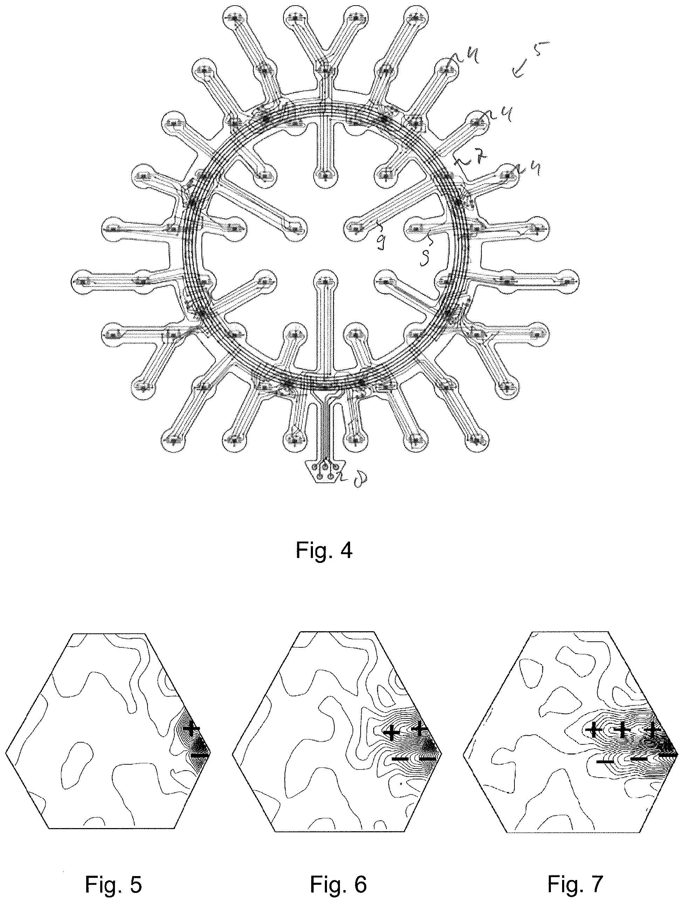

Figure 4 is a top view of a further sensor 5 for monitoring the growth of a crack in a ferromagnetic structure, in accordance with the present invention. The sensor comprises 60 magnetometers 4 mounted on a printed circuit board 7, arranged in a triangular pattern and at equal mutual distances. The magnetometers are connected to a controller 8 via leads 9 defined on the circuit board. The controller is configured to initiate the measurements, which are then carried out with the magnetometers, and to collect measured data from the magnetometers.

A layer of a magnetically permeable material (not shown in Figure 4) extends over the magnetometers. In a specific example, the layer is continuous, made from structural steel, has a thickness of 1 millimeter, and extends over all the magnetometers.

In Figures 5 to 7, the sensor has been positioned over a crack in a steel plate with the magnetometers resting directly on the plate. The steel plate has its own permanent magnetization and is additionally but not necessarily magnetized by the Earth magnetic field. Measurements were carried out at suitable intervals, depending e.g. on the duration of the load cycle (structures subjected to long cycles typically require less frequent measuring), to provide a two-dimensional representation of a defect (Figure 5) and subsequent changes, in this example growth (Figures 6 and 7), of the defect.

Benefits of defect detection and defect monitoring system based on such measurements are e.g. that the risk level of measured objects can be assessed, that rational decision making on defect repair can be made, and less frequent inspections can be made by surveyors what translates into less injuries/accidents, and/or significantly reduced costs.

The invention is not restricted to the embodiments described above and can be varied in numerous ways within the scope of the claims. For example, the sensor can be employed to detect new cracks, e.g. by placing sensors on locations where cracks are relatively likely to form.

## Claims

1. Sensor (5) for detection and/or monitoring the growth of defects, in particular cracks (2), in ferromagnetic structures (1), such as civil engineering and marine structures, comprising a plurality of magnetometers (4) for measuring magnetic flux leakage (MFL), which magnetometers (4) are arranged in a plane, and a support (7) carrying the magnetometers (4), **characterized by** a layer (6) of a magnetically permeable material extending over and/or between the magnetometers (4).

2. Sensor (5) according to claim 1, wherein the support (7) extends at least partially between the plurality of magnetometers (4) and/or between the plurality of magnetometers (4) and the layer (6) of a magnetically permeable material.

3. Sensor (5) according to claim 1 or 2, wherein the relative permeability of the magnetically permeable material is at least at least 10, preferably at least 100, preferably at least 1.000, preferably at least 10.000.

4. Sensor (5) according to any one of the preceding claims, wherein the layer (6) is made from a ferrometal, such as iron, cobalt, nickel and gadolinium, or (ferro)alloy, such as steel, Nanoperm®, Mu-metal.

5. Sensor (5) according to any one of the preceding claims, wherein the layer (6) has a thickness of at least 0.01 millimeter (mm), preferably a thickness in a range from 0.1 to 5 mm, preferably in a range from 0.5 to 2 mm.

6. Sensor (5) according to any one of the preceding claims, wherein the layer (6) of a magnetically permeable material extends over all the magnetometers (4).

7. Sensor (5) according to any one of the preceding claims, wherein the sensor (5) comprises at least 2 magnetometers (4), preferably at least 4 magnetometers (4), preferably at least 10 magnetometers (4), preferably at least 20 magnetometers (4), and/or wherein the magnetometers (4) are arranged in an array and/or wherein the distance between most, preferably all, of the magnetometers (4) is equal.

8. Sensor (5) according to any one of the preceding claims, wherein the magnetometers (4) are configured to measure magnetism based on Hall effect or based on anisotropic magnetoresistance (AMR).

9. Sensor (5) according to any one of the preceding claims, wherein the sensor (5) comprises an adhesive layer, mechanical fasteners and/or one or more magnets to mount the sensor (5) on a metal structure (1).

10. Sensor (5) according to any one of the preceding claims, wherein the layer (6) is flexible.

11. Sensor (5) according to any one of the preceding claims, comprising a controller (8) connected to the magnetometers (4) and configured to initiate the measurements carried out with magnetometers (4) and/or to collect measures data from the magnetometers (4).

12. Sensor (5) according to claim 11, wherein the controller is configured to repeatedly, preferably periodically, turn the sensor on, initiate the measurements, and turn the sensor off and/or wherein the sensor (5) comprises a battery and/or an energy generating and/or harvesting device.

13. Sensor (5) according to any one of the preceding claims, comprising a transmitter to send data measured magnetometers to a receiver.

14. Sensor (5) according to claim 13, wherein the transmitter is based on the Global System for Mobile Communications (GSM), Long Range Low Power (LoRa), or Wifi standard.

15. Sensor (5) according to any one of the preceding claims, wherein the magnetometers (4), the layer (6), and the support (7), and, if present, the controller and/or the transmitter, are accommodated in a housing and/or embedded in a surrounding material and/or wherein the sensor is water and/or oil resistant or weather-, water- and/or oilproof.
